(19) Europäisches Patentamt

European Patent Office

Office européen des brevets

(11) **EP 1 520 351 B1**

(12) **EUROPEAN PATENT SPECIFICATION**

(45) Date of publication and mention
of the grant of the patent:
**18.10.2006 Bulletin 2006/42**

(51) Int Cl.:
**H04B 1/69** (2006.01)

(21) Application number: **03760831.2**

(22) Date of filing: **12.06.2003**

(86) International application number:
**PCT/IB2003/002599**

(87) International publication number:
**WO 2004/001998 (31.12.2003 Gazette 2004/01)**

(54) **ULTRA-WIDEBAND SIGNAL RECEIVER USING FREQUENCY SUB-BANDS**

ULTRABREITBANDIGER SIGNALEMPFÄNGER MIT FREQUENZ-SUBBÄNDERN

RECEPTEUR DE SIGNAUX A BANDE ULTRA-LARGE UTILISANT DES SOUS-BANDES DE FREQUENCES

(84) Designated Contracting States:
**AT BE BG CH CY CZ DE DK EE ES FI FR GB GR HU IE IT LI LU MC NL PT RO SE SI SK TR**

(30) Priority: **25.06.2002 GB 0214621**

(43) Date of publication of application:
**06.04.2005 Bulletin 2005/14**

(73) Proprietor: **Koninklijke Philips Electronics N.V.**
**5621 BA Eindhoven (NL)**

(72) Inventor: **WILCOX, Martin S.,**
**Philips Intel. Prop. & Stand.**
**Redhill, Surrey RH1 5HA (GB)**

(74) Representative: **White, Andrew Gordon**
**Philips Intellectual Property & Standards,**
**Cross Oak Lane**
**Redhill,**
**Surrey RH1 5HA (GB)**

(56) References cited:
• **PETRAGLIA A ET AL: "HIGH-SPEED A/D CONVERSION INCORPORATING A QMF BANK" IEEE TRANSACTIONS ON INSTRUMENTATION AND MEASUREMENT, IEEE INC. NEW YORK, US, vol. 41, no. 3, 1 June 1992 (1992-06-01), pages 427-431, XP000307987 ISSN: 0018-9456**
• **WON NAMGOONG: "A channelized DSSS ultra-wideband receiver" PROCEEDINGS RAWCON 2001. 2001 IEEE RADIO AND WIRELESS CONFERENCE (CAT.NO.01EX514), PROCEEDINGS RAWCON 2001. 2001 IEEE RADIO AND WIRELESS CONFERENCE, WALTHAM, MA, USA, 19-22 AUG. 2001, pages 105-108, XP002254723 2001, Piscataway, NJ, USA, IEEE, USA ISBN: 0-7803-7189-5 cited in the application**

**Description**

The present invention relates to a signal receiver and in particular, but not exclusively, to a signal receiver suitable for receiving a wireless signal having a wide bandwidth.

The use of digital signal processing techniques to implement at least the baseband processing of a wireless receiver can bring benefits such as increased versatility and decreased cost. Commonly, an RF signal is mixed down to a low IF or to baseband before digitisation because digitisation at a high frequency requires a high speed analogue-to-digital converter (ADC). If conventional low-pass sampling is used to sample at the Nyquist rate, an ADC is required that can sample at twice the highest frequency of the signal. The sampling rate required for digitisation at RF may exceed the capability of commercially available ADCs, or require an ADC having a high power consumption or a high cost. Even after mixing down to a lower frequency, sampling at the Nyquist rate for the signal may exceed the capability of commercially available ADCs, or require an ADC having a high power consumption or a high cost.

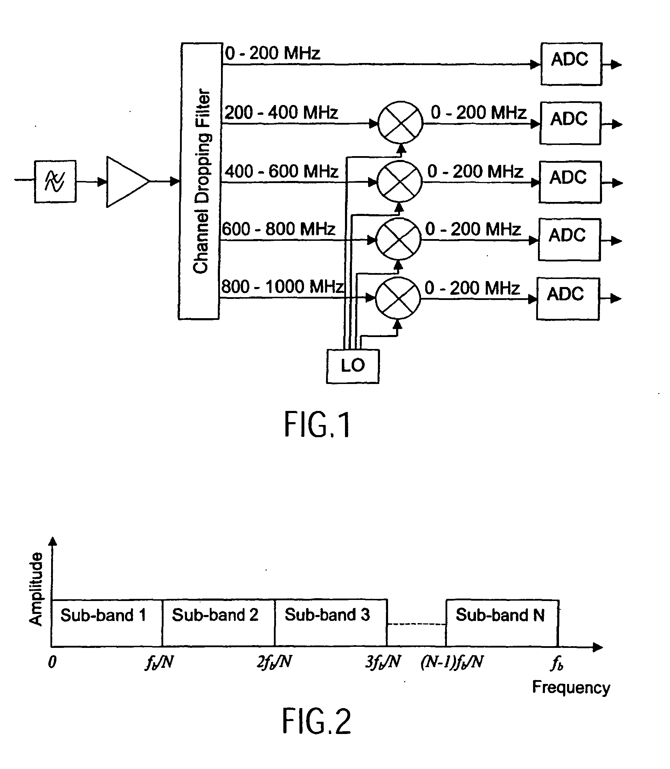

Ultra-wideband is a technique for performing radio communication and radio positioning which relies on sending a signal comprising ultra-short pulses. Such ultra-short pulses typically occupy frequencies from zero to one or more GHz and it is not practical to use a single ADC which will digitise at the Nyquist rate a signal containing such high frequencies. One solution for reducing the sampling rate below the Nyquist rate for the signal is reported in "Ultra-wideband radar technology", edited by J.D. Taylor, CRC Press, 2001, pages 77-78. This solution uses a bank of filters to separate the frequency spectrum of the signal into several sub-bands, mix each sub-band down to DC, and to digitise each sub-band separately using a bank of ADCs, each ADC sampling at a rate equal to the highest frequency in the mixed-down sub-band. A block schematic diagram of this prior art solution is illustrated in Figure 1 which shows a portion of a receiver suitable for a signal having a spectrum 0-1GHz. The bank of filters, referred to as a channel dropping filter, divides the received signal into five sub-bands each 200MHz wide, and four mixers and four different local oscillator signals are required to bring the signal in all the sub-bands into the range 0-200MHz where a bank of five ADCs, each ADC sampling at 200MHz, is used to digitise the signal in the sub-bands. The digitised output from each ADC is used to reconstruct the signal waveform, although no method or apparatus for doing this is disclosed in the Taylor reference. A disadvantage of this solution is the requirement for a bank of mixers and a means for generating a different local oscillator signal for each mixer. Such a plurality of devices adds to complexity and cost because, for example, mixers are active devices that consume power, contribute noise and have a limited dynamic range.

A further solution is disclosed in "A Channelised DSSS Ultra-Wideband Receiver", Won Namgoong, Proceedings RAWCON 2001, 2001 IEEE Radio and Wireless Conference, Waltham MA, USA, 19-22 August 2001, pages 105-108. This solution uses a bank of mixers each requiring a different local oscillator signal and with each mixer followed by a sub-band filter, so suffers the same disadvantages.

"High-Speed A/D conversion incorporating a QMF bank", IEEE transactions on instrumentation and Measurement, US, 01.06.1992, pp. 427-431 discloses a solution according to the preamble of claim 1.

An object of the present invention is to provide a signal receiver that overcomes at least some of the disadvantages of the prior art described above.

According to the invention there is provided a signal receiver comprising digitisation means for digitising a received signal and demodulation means for extracting the information content of the digitised received signal, wherein the digitisation means comprises filtering means for dividing the received signal into a plurality of frequency sub-bands, analogue-to-digital conversion means for digitising the signal in each sub-band, transform means for transforming the digitised signal in each sub-band into the frequency domain, and reconstruction means for concatenating in the frequency domain the digitised signal in each sub-band thereby reconstructing the spectrum of the received signal.

The reconstructed spectrum of the received signal may be at the same frequency as spectrum of the received signal prior to being divided into sub-bands, or may be at a lower frequency, for example a received signal having a bandpass spectrum may be shifted to DC.

By dividing the received signal into a plurality of sub-bands and digitising the signal in each sub-band, the requirement for an ADC capable of digitising the whole signal bandwidth by operating at the Nyquist rate is avoided. By digitising each sub-band without first downconverting each sub-band, the requirement for a bank of mixers and means for generating a different local oscillator signal for each mixer is avoided.

Optionally the received signal, if a bandpass signal, may be downconverted from a transmission frequency to a lower frequency prior to the digitisation means.

The sample rate required for digitising the signal in a sub-band depends on the bandwidth of that sub-band, as described below.

By judicious selection of sample rate for each sub-band, it is possible to use a common sample rate for a plurality of sub-bands, thereby simplifying the sample rate clock generation. Such sub-bands may have a common bandwidth.

By judicious selection of sample rate and bandwidth for each sub-band, it is possible to use a common sample rate for odd numbered sub-bands and a different common sample rate for even numbered sub-bands thereby simplifying the sample rate clock generation to two rates.

The analogue-to-digital conversion means may comprise an ADC for each sub-band. However, if the receiver is to be used to receive a signal that occupies only one sub-band at any one instant, such as a frequency hopping signal or a chirp signal, the analogue-to-digital conversion means need only digitise one sub-band at a time and a single ADC can be switched to each sub-band in turn, tracking the frequency of the received signal, thereby reducing the complexity of the analogue-to-digital conversion means.

The invention will now be described, by way of example only, with reference to the accompanying drawings wherein:

Figure 1 is block schematic diagram of a prior art receiver,
Figure 2 is a diagram of the frequency response of a filter bank,
Figure 3 is block schematic diagram of a first embodiment of a wireless receiver in accordance with the invention,
Figure 4 is block schematic diagram of a second embodiment of a wireless receiver in accordance with the invention, and
Figure 5 is a sketch illustrating sub-band spectra.

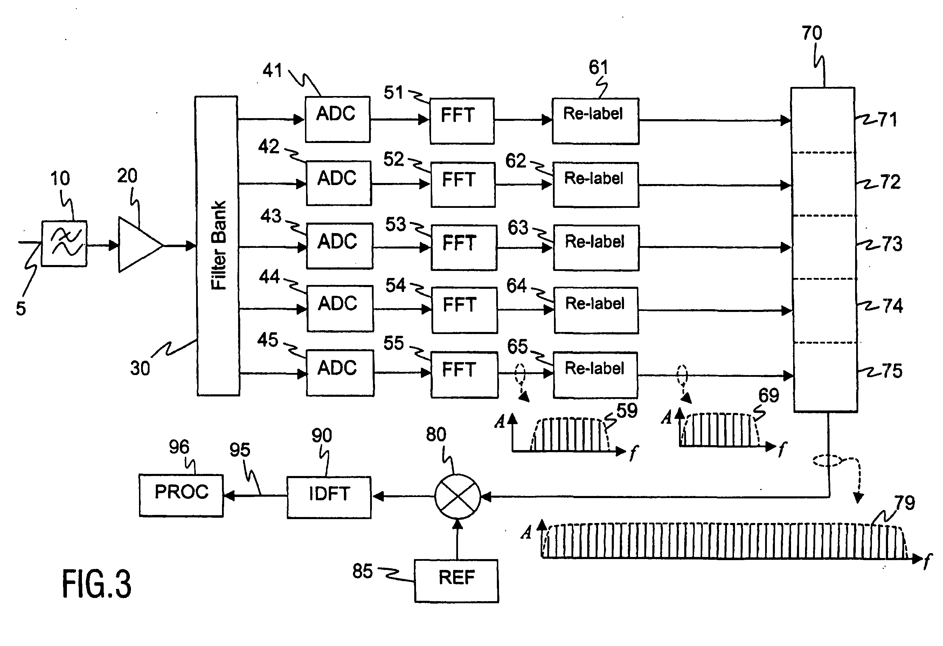

Referring to Figure 3 a first embodiment of the invention comprises a signal input 5 for receiving a signal from an antenna. Coupled to the signal input 5 is a low pass filter 10 for removing unwanted signal components from the received signal. Coupled to the output of the low pass filter 10 is an amplifier 20. The output of the amplifier 20 is coupled to an input of a filter bank 30. The filter bank 30 divides the signal delivered by the amplifier 20 into five sub-bands and the signals in each sub-band are delivered to respective ADCs 41-45 where they are digitised. Coupled to an output of each ADC is a respective FFT means 51-55 for transforming the digitised sub-band signal to the frequency domain, illustrated by the sketch 59 of a sub-band spectrum, using a Fast Fourier Transform (FFT). Coupled to an output of each FFT means 51-55 is a respective frequency shifting means 61-65 which performs a shifting of the frequency of the frequency domain sub-band signals to be positioned at DC, illustrated by the sketch 69 of a shifted sub-band spectrum, unless already at DC, by re-labelling of the frequencies. Coupled to an output of each frequency shifting means 61-65 is a respective storage portion 71-75 of a storage means 70. The frequency shifted sub-band signals are concatenated by storing them in their respective storage portions 71-75, thereby reconstructing the received signal in the frequency domain. An output of the storage means 70 is coupled to a first input of a multiplier means 80 which multiplies the reconstructed received signal by a reference signal, the reference signal being a replica of the signal spectrum as transmitted, being stored in a reference signal store 85 and being delivered to a second input of the multiplier means 80. An output of the multiplier means 80 is coupled to a means 90 for performing an inverse Discrete Fourier Transform (IDFT) which provides on an output 95 the cross-correlation function of the received signal and the reference signal. The output 95 is coupled to a processing means (PROC) 96 for further processing of the cross-correlation function as required by the application for which the wireless receiver is to be used. For example, the time of occurrence of a peak in the correlation function may be measured to determine the flight time of the signal, and consequently the range of the transmitter from the receiver. As another example, the polarity of a peak in the correlation function may be determined to detect the value of a data bit conveyed by the signal. As a further example, modulation of the time of arrival of the received signal may be determined as conveying information.

Figure 2 shows the frequency response of a filter bank which divides a signal having a bandwidth $f_b$ into $N$ sub-bands. In Figure 2, each sub-band has the same bandwidth $f_b/N$ but this is not essential. For the embodiment shown in Figure 3, $N$=5.

If the signals in the sub-bands are to be sampled by the respective ADCs 41-45 without aliasing, the ADC sampling rates must be selected to satisfy the following inequality:

$$\frac{2f_{u_i}}{r_i} \leq f_{s_i} \leq \frac{2f_{l_i}}{r_i - 1} \qquad (1)$$

$i$ = 1....N, where $f_{s_i}$ is the sample rate for the $i^{th}$ sub-band, $f_{u_i}$ is the upper frequency limit of the $i^{th}$ sub-band, $f_{l_i}$ is the lower frequency limit of the $i^{th}$ sub-band, and $r_i$ is an integer satisfying the inequality $1 \leq r_i \leq \text{int}\left\{\dfrac{f_{u_i}}{f_{u_i} - f_{l_i}}\right\}$. In general,

it is preferable that ADC sampling rates are selected such that aliasing is avoided, although for some types of received signal an amount of aliasing may be tolerable. In the following description it is assumed that aliasing is avoided.

Optionally $r_i$ may be selected such that a plurality of sub-bands share a common sample rate, which simplifies sample rate clock generation. For example, for a 5-sub-band embodiment as shown in Figure 3, and denoting the bandwidth of the $i^{th}$ sub-band as $W_i$, where $W_i = f_{u_i} - f_{l_i}$, gives

$$\text{sub-band 1:} \quad 2W_1 \leq f_{s_1} \leq \infty \qquad\qquad \text{for } r_1 = 1, \qquad (2)$$

$$\text{sub-band 2:} \quad 2(W_1 + W_2) \leq f_{s2} \leq \infty \qquad\qquad \text{for } r_2 = 1, \qquad (3)$$

$$\text{sub-band 3:} \quad (W_1 + W_2 + W_3) \leq f_{s3} \leq 2(W_1 + W_2) \qquad\qquad \text{for } r_3 = 2, \qquad (4)$$

$$\text{sub-band 4:} \quad (W_1 + W_2 + W_3 + W_4) \leq f_{s4} \leq 2(W_1 + W_2 + W_3) \qquad \text{for } r_4 = 2, \qquad (5)$$

$$\text{sub-band 5:} \quad \frac{2}{3}(W_1 + W_2 + W_3 + W_4 + W_5) \leq f_{s5} \leq (W_1 + W_2 + W_3 + W_4) \quad \text{for } r_5 = 3 \quad (6)$$

In this case, a common sample rate satisfying inequality (3) may be used for sub-bands 1 and 2.

Other possibilities of common sampling rates may be determined for specific values of $r_i$ and sub-band bandwidth $W_i$.

Sub-bands sharing a common sample rate may optionally have a common bandwidth. For example, if $W_1 = W_3 = B$, a common sampling rate can be used for sub-bands 1 and 3 provided that it satisfies the inequality $3B \leq f_3 \leq 4B$. As another example, if $W_2 = W_4 = B$, a common sampling rate can be used for sub-bands 2 and 4 provided that it satisfies the inequality $4B \leq f_4 \leq 6B$.

Particularly advantageous sample rates can be derived by setting $r_i = \left\lfloor \dfrac{i+1}{2} \right\rfloor$ and $W_i = B$ for all values of $i$, i.e. a common bandwidth for all sub-bands. In this case only two different sample rates are required; a first common sample rate may be used for all the odd numbered sub-bands, provided that it satisfies the inequality (1) for the highest odd-numbered sub-band, and a second, different common sample rate may be used for all the even numbered sub-bands, provided that it satisfies the inequality (1) for the highest even-numbered sub-band. For the embodiment shown in Figure 3 and a common bandwidth of $B$=200MHz for all sub-bands, the first common sample rate must satisfy the inequality $\dfrac{10}{3}B \leq f_{s_5} \leq 4B$, and so a value of 733MHz would conveniently lie in the centre of the allowable range, and the second, different common sample rate must satisfy the inequality $4B \leq fs_4 \leq 6B$, and so a value of 1 GHz would conveniently lie in the centre of the allowable range.

Other possibilities of a first common sampling rate for the odd-numbered sub-bands and a different common sample rate for the even numbered sub-bands may be determined for specific values of sub-band bandwidth $W_i$ where the sub-band bandwidths are unequal.

The acceptable range of values of the sample rate as expressed by the inequality (1) defines the acceptable limits of frequency error that each sample rate may have. It is preferable to select sample rates that lie approximately in the centre of their respective acceptable range. For the embodiment shown in Figure 3 and with $B$=200MHz, the tolerance on a first common sample rate of 733MHz is approximately $\pm$9%, and the tolerance on a second common sample rate of 1GHz is $\pm$20%. Alternatively, for a chosen sample rate $f_{s_i}$ the inequality (1) can be used to define the acceptable tolerance limits on $f_{l_i}$ and $f_{u_i}$ for the respective sub-bands provided by the filter bank 30. Of course the tolerance on the sample rate may be traded for tolerance on $f_{l_i}$ and $f_{u_i}$.

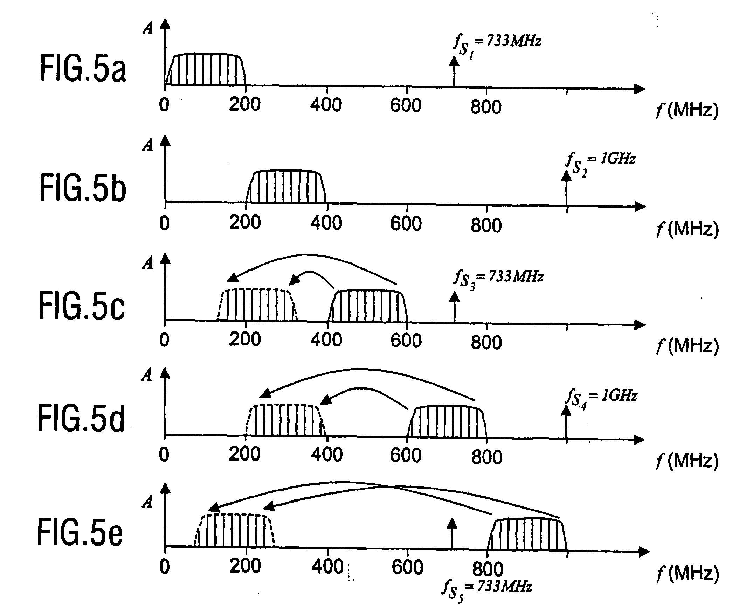

The digitised sub-band signals delivered by the ADCs 41-45 include copies of the sub-band spectrum replicated at integer multiples of the sample rate. Therefore, the FFT means 51-55 comprise filtering means for selecting a single sub-band spectrum. Figure 5 illustrates sub-band spectra (amplitude A versus frequency $f$) for the example of a 0-1GHz signal divided into sub-bands 200MHz wide.

Figure 5 plot 5(a) in illustrates the first sub-band spectrum at 0-200MHz with a sample rate of $f_{s1}$=733MHz. Replica spectra are all above 200MHz and are filtered out by the FFT means 51; they are not shown in plot (a).

Plot (b) illustrates the second sub-band spectrum at 200-400MHz with a sample rate of $f_{s2}$ =1GHz. Replica spectra are all above 400MHz and are filtered out by the FFT means 52; they are not shown in plot (b).

Plot (c) illustrates the third sub-band spectrum at 400-600MHz sampled at a sample rate of 733MHz. The sampling process generates a replica of the sub-band spectrum at 133-333MHz, reversed such that the lower frequencies of the sub-band prior to sampling now appear as the upper frequencies of the replica at 133-333MHz. In Figure 5, the envelopes of the replica sub-band spectra are indicated with a broken line. The FFT means 53 comprises means for selecting the replica sub-band spectrum at 133-333MHz and also for reversing its spectrum to restore the order of its frequency components.

Plot (d) illustrates the fourth sub-band spectrum at 600-800MHz sampled at a sample rate of 1GHz. The sampling process generates a replica of the sub-band spectrum at 200-400MHz, reversed such that the lower frequencies of the sub-band prior to sampling now appear as the upper frequencies of the replica at 200-400MHz. The FFT means 54 comprises means for selecting the replica sub-band spectrum at 200-400MHz and also reversing its spectrum to restore the order of its frequency components.

Plot (e) illustrates the fifth sub-band spectrum at 800-1000MHz sampled at a sample rate of 733MHz. The sampling process generates a replica of the spectrum at 67-267MHz without any reversal. The FFT means 55 comprises means for selecting the replica sub-band spectrum at 133-333MHz.

The frequency shifting means 61-65 are used to shift each selected sub-band spectrum to DC. For the example, as illustrated in Figure 5, the shift required by sub-bands 2, 3, 4 and 5 are respectively 200MHz, 133MHz, 200MHz, and 67MHz. The shifting can be achieved by re-labelling the frequency of the spectral components. Optionally, the reversing of replica sub-band spectra may be performed by the frequency shifting means instead of by the FFT means.

The received signal is reconstructed in the frequency domain by concatenating the frequency shifted sub-band signals in the storage means 70. The process of concatenation shifts the $i^{th}$ sub-band signal, $i$=2, $N$, in the frequency domain to respective frequencies $f_{i}$, $i$=2, $N$ which in the example illustrated in Figure 5 are 200, 400, 600 and 800MHz. The reconstructed spectrum is illustrated in Figure 3 by the sketch 79 of the spectrum delivered at the output of the storage means 70. The resolution of the FFT means 51-55 depends on the sample rate of the respective ADC 41-45; a high sample rate results in frequency components more closely spaced than a lower sample rate. Because the resolution of each the FFT means 51-55 is not equal, the frequency components of the reconstructed spectrum are not uniformly spaced. This non-uniformity is not illustrated in the sketch 79 of the reconstructed spectrum. The reference signal stored in the reference signal store 85 is specified at the same non-uniformly spaced frequency values as the reconstructed spectrum. The means 90 for performing an IDFT is able to operate with the non-uniform spaced frequency values.

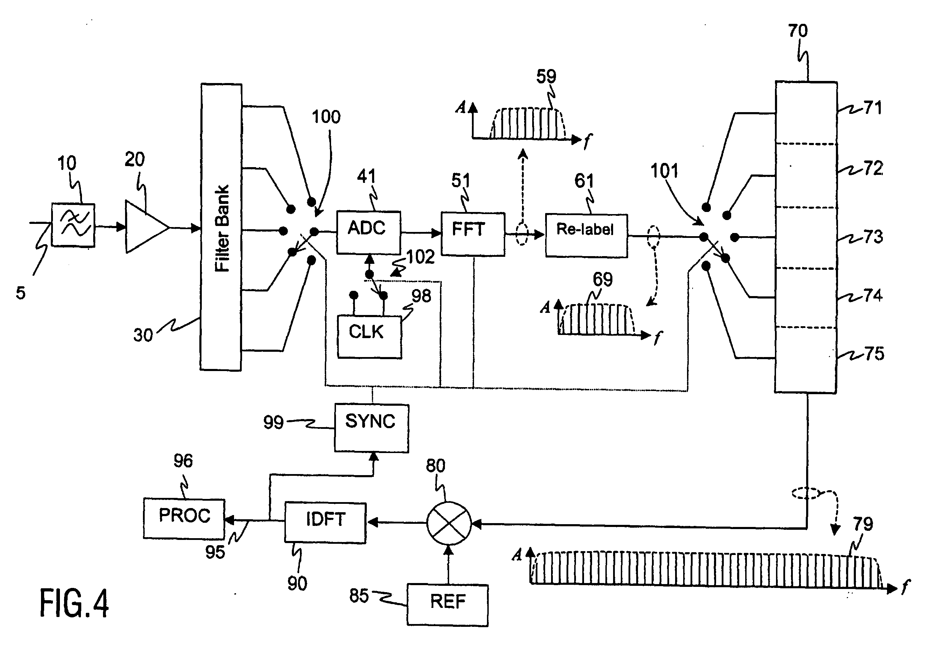

Referring to Figure 4 which illustrates a second embodiment of the invention, identical reference numerals have been used for elements that are identical or similar to elements of the embodiment illustrated in Figure 3; the differences of elements of Figure 4 are described below. The embodiment illustrated in Figure 4 can be used if the receiver is to be used to receive a signal that occupies only one sub-band at any one instant, such as a frequency hopping signal or a chirp signal. A single ADC 41, FFT means 51 and frequency shifting means 61 is used. The input of the single ADC 41 is switched to each output of the filter bank 30 in turn by means of a first commutating switch means 100, and output of the single frequency shifting means 61 is switched to each storage portion 71-75 in turn by means of a second commutating switch means 101. The switching of the first and second commutating switch means 100, 101 is synchronised by a synchronisation means (SYNC) 99. The order in which sub-bands are selected for processing is predetermined to match the known frequency hopping sequence or known chirp profile of the transmitted signal A clock generator (CLK) 98 generates the sample rates required by the ADC 41 for digitising each sub-band in turn and a selection switch means 102 is synchronised by the synchronisation means 99 to select the required sample rate for each sub-band. The selection switch means 102 in Figure 4 provides for selection between two sample rates, but any required number of selections may be provided. The synchronisation means 99 is also coupled to the FFT means 51 to synchronise the switching of the filtering and reversing functions as appropriate to the current sub-band signal.

If the switching of the first and second commutating switch means 100, 101, the selection switch means 102, and the filtering and spectrum reversing of the FFT means 51 are not synchronised to the sub-band which the received signal occupies at any one instant, after one commutation cycle the storage means 70 will not contain a complete set of sub-band signals and so the received signal will not be fully reconstructed in the storage means 70 and the cross-correlation function provided at the output 95 will exhibit weak correlation. The output 95 is coupled to an input of the synchronisation means 99 which adjusts the phase of the commutating switch means 100, 101, the selection switch means 102, and the filtering and reversing of the FFT means 51 until a maximum correlation is exhibited at the output 95. Optionally, means for detecting the signal strength in each sub-band may be included to provide an indication to the synchronisation means 99 of the current frequency occupancy of the received signal, thereby assisting the synchronisation means 99 to synchronise the commutating cycle, the selection switch means 102 and the FFT means 51 with the received signal.

Although the invention has been described by means of an example of a wireless receiver, the invention is equally applicable to a receiver for receiving a signal via a different medium, for example via wire or optically.

Although the invention has been described by means of an example of a receiver suitable for receiving a wideband or ultra-wideband signal, the invention can also be used for receiving signals having a narrower bandwidth.

Optionally a demodulation process different to that described herein may be applied to demodulate the digitised received signal.

Optionally the receiver may comprise a power saving scheme in which some or all of the receiver elements adopt a power saving mode and are activated at intervals to receive a signal. For example, if the receiver is to be used to receive a signal having a duty cycle less than one, then a bank of ADCs can also be operated with a duty cycle less than one, sampling only for periods in which the signal is expected to be present.

In the present specification and claims the word "a" or "an" preceding an element does not exclude the presence of a plurality of such elements. Further, the word "comprising" does not exclude the presence of other elements or steps than those listed.

From reading the present disclosure, other modifications will be apparent to persons skilled in the art. Such modifications may involve other features which are already known in the design, manufacture and use of signal receivers, and which may be used instead of or in addition to features described herein.

**Claims**

1. A signal receiver comprising digitisation means for digitising a received signal and demodulation means (80, 85, 90, 96) for extracting the information content of the digitised received signal, wherein the digitisation means comprises filtering means (30) for dividing the received signal into a plurality of frequency sub-bands, analogue-to-digital conversion means (41 - 45) for digitising the signal in each sub-band, **characterized in that** the digitisation means further comprises transform means (51- 55) for transforming the digitised signal in each sub-band into the frequency domain, and reconstruction means (51 - 55, 61 - 65, 70) for concatenating in the frequency domain the digitised signal in each sub-band thereby reconstructing the spectrum of the received signal.

2. A receiver as claimed in claim 2, wherein the reconstruction means (51 - 55, 61 - 65, 70) reconstructs the spectrum of the received signal at a frequency lower than the frequency of the spectrum of the received signal prior to being divided into sub-bands.

3. A receiver as claimed in claim 1 or 2, wherein the analogue-to-digital conversion means (41 - 45) comprises means for sampling the signal in the $i^{th}$ sub-band at a sample rate $f_{s_i}$ in the range $\dfrac{2 f_{u_i}}{r_i} \leq f_{s_i} \leq \dfrac{2 f_{l_i}}{r_i - 1}$ where $f_{u_i}$ is the upper frequency limit of the sub-band and $f_{l_i}$ is the lower frequency limit of the $i^{th}$ sub-band, and $r_i$ is an integer satisfying the inequality $1 \leq r_i \leq \text{int} \left\{ \dfrac{f_{u_i}}{f_{u_i} - f_{l_i}} \right\}$.

4. A receiver as claimed in claim 3, wherein the analogue-to-digital conversion means (41 - 45) comprises means for sampling the signal in a plurality of the sub-bands at a common sample rate.

5. A receiver as claimed in claim 3, wherein the analogue-to-digital conversion means (41 - 45) comprises means for sampling the signal in a first sub-set of the sub-bands at a first sample rate and for sampling the signal in a second sub-set of the sub-bands at a second sample rate and wherein the signal in adjacent sub-bands is sampled at unequal sample rates.

6. A receiver as claimed in claim 4 or 5, wherein the plurality of sub-bands having a common sample rate have a common bandwidth.

7. A receiver as claimed in any one of claims 1 to 6, wherein the analogue-to-digital conversion means comprises means (41) for digitising a plurality of sub-bands sequentially.

**8.** A receiver as claimed in claim 7, wherein the transform means comprises means (51) for transforming the digitised signal in a plurality of the sub-bands sequentially.

**9.** A receiver as claimed in any one of claims 1 to 8, wherein the reconstruction means comprises means (51 - 55) for selecting a replica spectrum of a sub-band signal and means (51 - 55 or 61 - 65) for re-inverting the replica spectrum if the replica spectrum is inverted.

**10.** A receiver as claimed in any one of claims 1 to 9, wherein the demodulation means comprises means (80) for multiplying the reconstructed received signal by a reference signal in the frequency domain at non-uniformly spaced frequencies.

**11.** A receiver as claimed in any one of claims 1 to 9, comprising down-conversion means prior to the digitisation means for down-converting the received signal from a transmission frequency to a lower frequency.

**Patentansprüche**

**1.** Signalempfänger, welcher Digitalisierungsmittel zum Digitalisieren eines empfangenen Signals und Demodulationsmittel (80, 85, 90, 96) zum Extrahieren des Informationsgehalts des digitalisierten empfangenen Signals umfasst, wobei das Digitalisierungsmittel Filtermittel (30) zum Zerlegen des empfangenen Signals in mehrere Frequenz-Subbänder und Analog-Digital-Umsetzmittel (41 - 45) zum Digitalisieren des Signals in jedem Subband umfasst, **dadurch gekennzeichnet, dass** das Digitalisierungsmittel ferner Transformationsmittel (51 - 55) zum Transformieren des digitalisierten Signals in jedem Subband in den Frequenzbereich und Rekonstruktionsmittel (51 - 55, 61 - 65, 70), um in dem Frequenzbereich das digitalisierte Signal in jedem Subband zu verketten und **dadurch** das Spektrum des empfangenen Signals zu rekonstruieren, umfasst.

**2.** Empfänger nach Anspruch 1, wobei das Rekonstruktionsmittel (51 - 55, 61 - 65, 70) das Spektrum des empfangenen Signals bei einer Frequenz rekonstruiert, die niedriger ist als die Frequenz des Spektrums des empfangenen Signals, bevor es in Subbänder zerlegt wurde.

**3.** Empfänger nach Anspruch 1 oder 2, wobei das Analog-Digital-Umsetzmittel (41 - 45) Mittel zum Abtasten des Signals im $i$-ten Subband mit einer Abtastfrequenz $f_{s_i}$ im Bereich $\dfrac{2f_{u_i}}{r_i} \le f_{s_i} \le \dfrac{2f_{l_i}}{r_i - 1}$ umfasst, wobei $f_{u_i}$ die obere Frequenzgrenze des $i$-ten Sub-bandes ist und $f_{l_i}$ die untere Frequenzgrenze des $i$-ten Subbandes ist und $r_i$ eine ganze Zahl ist, welche der Ungleichung $1 \le r_i \le \text{int}\left\{ \dfrac{f_{u_i}}{f_{u_i} - f_{l_i}} \right\}$ genügt.

**4.** Empfänger nach Anspruch 3, wobei das Analog-Digital-Umsetzmittel (41 - 45) Mittel zum Abtasten des Signals in mehreren Subbändern mit einer gemeinsamen Abtastfrequenz umfasst.

**5.** Empfänger nach Anspruch 3, wobei das Analog-Digital-Umsetzmittel (41 - 45) Mittel zum Abtasten des Signals in einer ersten Teilmenge der Subbänder mit einer ersten Abtastfrequenz und zum Abtasten des Signals in einer zweiten Teilmenge der Subbänder mit einer zweiten Abtastfrequenz umfasst und wobei das Signal in benachbarten Subbändern mit unterschiedlichen Abtastfrequenzen abgetastet wird.

**6.** Empfänger nach Anspruch 4 oder 5, wobei die mehreren Subbänder, welche eine gemeinsame Abtastfrequenz aufweisen, eine gemeinsame Bandbreite aufweisen.

**7.** Empfänger nach einem der Ansprüche 1 bis 6, wobei das Analog-Digital-Umsetzmittel Mittel (41) zum Digitalisieren mehrerer Subbänder nacheinander umfasst.

**8.** Empfänger nach Anspruch 7, wobei das Transformationsmittel Mittel (51) zum Transformieren des digitalisierten Signals in mehrere der Subbänder nacheinander umfasst.

**9.** Empfänger nach einem der Ansprüche 1 bis 8, wobei das Rekonstruktionsmittel Mittel(51 - 55) zum Auswählen eines eine Kopie darstellenden Spektrums eines Subband-Signals und Mittel (51 - 55 oder 61 - 65) zum erneuten Invertieren des eine Kopie darstellenden Spektrums, falls das eine Kopie darstellende Spektrum invertiert ist, umfasst.

**10.** Empfänger nach einem der Ansprüche 1 bis 9, wobei das Demodulationsmittel Mittel (80) zum Multiplizieren des rekonstruierten empfangenen Signals mit einem Referenzsignal in dem Frequenzbereich bei ungleichmäßige Abstände aufweisenden Frequenzen umfasst.

**11.** Empfänger nach einem der Ansprüche 1 bis 9, welcher vor den Digitalisierungsmitteln Heruntermisch-Mittel zum Heruntermischen des empfangenen Signals von einer Übertragungsfrequenz zu einer niedrigeren Frequenz umfasst.


**Revendications**

**1.** Récepteur de signaux comprenant des moyens de numérisation pour numériser un signal reçu et des moyens de démodulation (80, 85, 90, 96) pour extraire le contenu d'informations du signal reçu numérisé, dans lequel les moyens de numérisation comprennent des moyens de filtrage (30) pour diviser le signal reçu en une pluralité de sous-bandes de fréquences, des moyens de conversion analogique-numérique (41-45) pour numériser le signal dans chaque sous-bande, **caractérisé en ce que** les moyens de numérisation comprennent en outre des moyens de transformation (51-55) pour transformer le signal numérisé dans chaque sous-bande dans le domaine fréquentiel, et des moyens de reconstruction (51-55, 61-65, 70) pour enchaîner dans le domaine fréquentiel le signal numérisé dans chaque sous-bande, reconstruisant par ce moyen le spectre du signal reçu.

**2.** Récepteur selon la revendication 2, dans lequel les moyens de reconstruction (51-55, 61-65, 70) reconstruisent le spectre du signal reçu à une fréquence inférieure à la fréquence du spectre du signal reçu avant que celui-ci ne soit divisé en sous-bandes.

**3.** Récepteur selon la revendication 1 ou 2, dans lequel les moyens de conversion analogique-numérique (41-45) comprennent des moyens pour échantillonner le signal dans la i$^e$ sous-bande à une fréquence d'échantillonnage $f_{s_i}$ dans la plage $\dfrac{2f_{u_i}}{r_i} \leq f_{s_i} \leq \dfrac{2f_{l_i}}{r_i-1}$, où $f_{u_i}$ est la limite de fréquence supérieure de la sous-bande et $f_{l_i}$ est la limite de fréquence inférieure de la i$^e$ sous-bande, et $r_i$ est un nombre entier satisfaisant l'inégalité $1 \leq r_i \leq \text{int}\left\{\dfrac{f_{u_i}}{f_{u_i} - f_{l_i}}\right\}$.

**4.** Récepteur selon la revendication 3, dans lequel les moyens de conversion analogique-numérique (41-45) comprennent des moyens pour échantillonner le signal dans une pluralité des sous-bandes à une fréquence d'échantillonnage commune.

**5.** Récepteur selon la revendication 3, dans lequel les moyens de conversion analogique-numérique (41-45) comprennent des moyens pour échantillonner le signal dans un premier sous-ensemble des sous-bandes à une première fréquence d'échantillonnage et pour échantillonner le signal dans un second sous-ensemble des sous-bandes à une seconde fréquence d'échantillonnage et dans lequel le signal dans des sous-bandes adjacentes est échantillonné à des fréquences d'échantillonnage inégales.

**6.** Récepteur selon la revendication 4 ou 5, dans lequel les sous-bandes de la pluralité de sous-bandes ayant une fréquence d'échantillonnage commune ont une bande passante commune.

**7.** Récepteur selon l'une quelconque des revendications 1 à 6, dans lequel les moyens de conversion analogique-numérique comprennent des moyens (41) pour numériser une pluralité de sous-bandes consécutivement.

**8.** Récepteur selon la revendication 7, dans lequel les moyens de transformation comprennent des moyens (51) pour transformer le signal numérisé dans une pluralité des sous-bandes consécutivement.

**9.** Récepteur selon l'une quelconque des revendications 1 à 8, dans lequel les moyens de reconstruction comprennent des moyens (51-55) pour sélectionner un spectre réplique d'un signal de sous-bande et des moyens (51-55 ou 61-65) pour réinverser le spectre réplique si le spectre réplique est inversé.

**10.** Récepteur selon l'une quelconque des revendications 1 à 9, dans lequel les moyens de démodulation comprennent des moyens (80) pour multiplier le signal reçu reconstruit par un signal de référence dans le domaine fréquentiel à des fréquences espacées de manière non uniforme.

**11.** Récepteur selon l'une quelconque des revendications 1 à 9, comprenant des moyens de changement de fréquence avant les moyens de numérisation pour changer la fréquence du signal reçu d'une fréquence de transmission vers une fréquence inférieure.

FIG.1

FIG.2

FIG.3

FIG.4

FIG.5a

$f_{S_1} = 733\,MHz$

$f$ (MHz)

FIG.5b

$f_{S_2} = 1GHz$

$f$ (MHz)

FIG.5c

$f_{S_3} = 733\,MHz$

$f$ (MHz)

FIG.5d

$f_{S_4} = 1GHz$

$f$ (MHz)

FIG.5e

$f_{S_5} = 733\,MHz$

$f$ (MHz)

EP 1 520 351 B1